(19) Europäisches Patentamt
European Patent Office
Office européen des brevets

(11) **EP 3 059 646 A1**

(12) **EUROPEAN PATENT APPLICATION**

(43) Date of publication:
**24.08.2016 Bulletin 2016/34**

(51) Int Cl.:
**G05B 13/04** *(2006.01)* **G05B 17/02** *(2006.01)*
**H02J 3/12** *(2006.01)*

(21) Application number: **15155604.0**

(22) Date of filing: **18.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Technische Universität Wien**
**1040 Wien (AT)**

(72) Inventors:
• **Kozek, Martin**
**1140 Vienna (AT)**

• **Brandstetter, Markus**
**1341 Céroux-Mousty (BE)**
• **Miletic, Maja**
**1060 Vienna (AT)**
• **Schirrer, Alexander**
**1220 Vienna (AT)**

(74) Representative: **Weiser, Andreas**
**Patentanwalt**
**Kopfgasse 7**
**1130 Wien (AT)**

(54) **Method and controller for controlling a power grid**

(57) The invention relates to a method for controlling power consumption in a power grid (1) having a grid controller (6) with a stored network model (7) and at least one smart consumer (4) capable of predicting its power consumption profile ($\Theta^d$), wherein an iteration step is performed in the grid controller (6) including receiving a predicted power consumption profile ($\Theta^d$) from each smart consumer (4), determining a proposed power consumption profile ($\Theta$) for each of a selected set of smart consumers (4) by iteratively solving an optimization problem, and sending said proposed power consumption profiles ($\Theta$) to the smart consumers (4); and repeating said iteration step for said prediction time window in a loop until an exit condition is met. The invention further relates to a grid controller (6) implementing this method.

Fig. 1

Printed by Jouve, 75001 PARIS (FR)

## Description

### Field of the Invention

The present invention relates to a method for controlling power consumption in a power grid having one or more power producers and power consumers, a network of power lines and nodes therebetween, a communication infrastructure therebetween, and a grid controller connected to the communication infrastructure. The invention further relates to a grid controller for such a power grid.

The term "power" in the present context comprises all sorts of power, be it electrical power, hydraulic or pneumatic power, thermal power transported by fluids, water or steam in district heating grids, thermal power stored in combustible gases or fuels transported in fluid distribution grids, etc.

Therefore, while the present disclosure of the invention will be given in detail under specific reference to electrical power and an electrical power grid, the terms "power" and "power grid" as used herein comprise all these sorts of powers and grids.

### Background of the Invention

While the electrical power consumption in urban power grids has been stagnating in the last decades or, in some regions, even slightly decreased, the peak-to-average ratio of the power consumption has increased considerably and represents a risk to the grid infrastructure. One of the most important goals for grid management is to reduce the electric power consumption during peak demand periods in order to assure reliability and efficiency of the electrical power grid. Moreover, the use of renewable energy has had a strong annual growth over the past decade (see, e.g., reference [1]). There are many efforts and increasing support to further develop exploitation of renewable sources motivated by climate change (in order to reduce the emissions of greenhouse gases) and high oil prices [2]. However, the fluctuating availability of electricity produced by renewable sources is an additional challenge for the performance of the electrical power supply [3]. It is desirable to accommodate these load variations by upgrading the grid's infrastructure into a "smart grid", through a cohesive integration of new communication and information technologies, which would allow power utilities to monitor and manage the power grid, and take control actions remotely, from a central location [4].

In order to reduce peak electricity demand in electrical grids, a common approach is to introduce smart pricing, which has been extensively studied since the beginning of the 1980s (e.g. see [5]). In more recent work [6, 7] a real-time pricing tariff is constructed based on spot market prices and time-series grid loads. The obtained dynamic electricity tariff is directly incorporated into the cost function of a building model predictive control (MPC) for, e.g., a building climate control. In [8] authors introduce an advanced pricing method: the so-called Vickrey-Clarke-Groves mechanism is used to determine the price charged to each user based on its declared energy demand information, as well as its minimal and maximal electrical power levels and its minimal total energy requirements. It is demonstrated that the proposed method encourages the truthfulness of the users and results in load shifting to off-peak hours. Another smart pricing mechanism has been proposed in [9], which ensures both optimality and fairness in autonomous demand response systems. In [10] scheduling of the power consumption for the consumers in the smart grid is proposed based on the water-filling algorithm, as a response to the dynamic prices set by the utility company.

All of the above mentioned approaches are decentralized. Alternatively, cooperative distributed model predictive control (DMPC) can be used for demand management in smart grids, which in general has high communication requirements. In order to lower the communication requirements in large-scale systems, the authors of [11] propose a low-communication DMPC, where it is suggested that the end-users only communicate with their neighbours. They introduce an algorithm for two agents based on game theory and demonstrate its robustness against communication failure through simulations. In [12], dynamic prices are proposed in order to improve overall consumption uniformity. It is studied how close the total power consumption load in the grid comes to the ideal flat profile, depending on the amount of information the consumers are willing to share between each other. Assuming all demand information is shared, a cooperative game is proposed. Otherwise, distributed stochastic strategies are recommended. Further, in [13] and [14] the authors formulate an energy consumption scheduling game for a given dynamic pricing strategy and show that the global optimal performance, with the energy costs as the objective function, is achieved at the Nash equilibrium.

In recent years, applications of hierarchical model predictive control (HMPC) to energy management in electrical power grids has been presented in the literature. In papers [15,16,17] the control structure consists of three tiers: top-level controller, aggregators and consumers. In [15, 16] the authors propose a hierarchical controller with the goal to coordinate the demand of the consumers with the fluctuations in the power production which is typical for renewable energy sources. The control algorithm requires the information on the available electrical energy in the grid on some finite horizon and exact individual power and energy constraints of the intelligent users, represented by convex polytopes. Optimization and distribution is performed recursively over the time steps of the horizon. The disadvantage of the method proposed in [15] is that the top-level controller/aggregator need to have the information about the physical bounds of the energy storage levels and capacity of the consumers. Furthermore, the upstream communication demand in the grid is high. In [16] the top-level controller needs to have a storage model of the consumers and the information on the demand of the consumers. Another HMPC approach is presented in [17], where the automatic generation control is accomplished by means of a complex cascade control based on the dynamical model of the electrical grid to cover different time scales. The grid controller integrates both renewable and traditional power producers and consumers, with focus on incorporating electrical vehicles. The disadvantage of method in [17] is that the aggregators need to have a battery model for each vehicle and they need to make a prediction of charging and discharging power and state of charge for each vehicle based on driver inputs and statistical data. Furthermore, in [18] the authors present a concept for an HMPC architecture to efficiently integrate active buildings into low voltage grids by exploiting their thermal storage capacities with the objectives to minimize total electric transmission losses and relative peak loads. The main disadvantage of all of the above presented methods [15,16,17,18] is that the top-level controller has a direct access to consumer behavior, i.e. it completely dictates the consumers power consumption profile.

## Object of the invention

It is an object of the invention to provide improved methods and apparatus which overcome the above-mentioned drawbacks of the state of the art.

## Summary of the Invention

In a first aspect, the invention provides for a method for controlling power consumption in a power grid having one or more power producers and power consumers, a network of power lines and nodes therebetween, a communication infrastructure therebetween, and a grid controller connected to the communication infrastructure, the grid controller having a stored model of the network, and at least one of the power consumers being a smart consumer capable of predicting its power consumption profile over a prediction time window, comprising:

> for each smart consumer, determining an influence weight of its power consumption on line currents and node potential drops in the network model;
> for said prediction time window, performing an iteration step in the grid controller including:

> - receiving a predicted power consumption profile for said prediction time window from each smart consumer via the communication infrastructure,
> - determining a proposed power consumption profile for said prediction time window for each of a selected set of smart consumers by iteratively solving an optimization problem wherein
> a measure of the differences between the to-be-determined proposed power consumption profiles and the received predicted power consumption profiles, respectively weighted by said influence weights,
> is minimized under the constraints
> that line currents and node potential drops in the network model stay within allowed ranges over the entire prediction time window, and
> - sending said proposed power consumption profiles to the smart consumers via the communication infrastructure;

> and repeating said iteration step for said prediction time window in a loop which is exited when at least one of the following conditions is met:

> - all line currents and node potential drops of the network, as calculated by applying the received predicted power consumption profiles to the network model, stay within allowed ranges over the entire prediction time window, or
> - none of the received predicted power consumption profiles has changed with respect to the preceding iteration step, or
> - a maximum number of iteration steps has been reached.

In a second aspect, the invention provides for an electronic grid controller for a power grid which has one or more power producers and power consumers, a network of power lines and nodes therebetween, and a communication infrastructure therebetween, the grid controller comprising:

> an interface being part of the communication infrastructure;
> a memory having a model of the network stored therein; and
> a processor being configured to implement the methods of the invention disclosed herein.

The grid controller of the invention, being of the type of an hierarchical model predictive controller (HMPC) and also called "hierarchical grid controller" or "hierarchical MPC" in the following, receives predicted power consumption profiles (load profiles) from end-users, e.g., smart buildings. Based on these information, it predicts the overall power consumption profile in the power grid over some finite horizon and proposes constraints on the power consumption to the consumers when necessary, in order to avoid violations of grid specifications at critical nodes and lines. A significant advantage of the inventive controller and controlling method is that the communication requirements with consumers in the grid are low. Furthermore, it can also provide for optimal satisfaction of consumer energy demand over time intervals of fixed length, so that the service quality for the consumers will not be compromised.

Another advantage of the inventive hierarchical approach disclosed herein is that it does not require information about the current state and bounds of local storage situation, which are difficult to determine, and it also does not require simplified models for the smart consumers. The smart pricing approaches as in the state of the art are decentralized methods and there each consumer makes an individual response without having information about the load of other consumers in the grid. On the other hand, the hierarchical approach of the method and controller of the invention manages time-varying power consumption in the grid without the disadvantage of high communication requirements typical for distributed cooperative methods.

Basically, said selected set of smart consumers for which a proposed power consumption profile is determined by solving said optimization problem can include all of the smart consumers. In a further embodiment of the invention, however, said selected set can include - even only for one or more selected time step/s within the prediction time window - only those smart consumers whose predicted power consumption profile has changed with respect to the preceding iteration step, wherein this change criteria can comprise any condition of the profile, thus reducing processing for some time steps of the prediction time window of an iteration step.

In a preferred practical implementation of this embodiment, to this end, for each smart consumer a flag indicating whether its predicted power consumption profile has changed from one iteration step to another - and preferably such a flag for each time step of the prediction time window - can be stored in a compliance matrix which defines said set and can be used in the solving of the optimization problem.

In this way, iterations in which new proposed power consumption profiles are negotiated between the grid controller and the smart consumers can be restricted to "compliant" consumers, i.e. to those consumers, which still productively cooperate in the negotiation, while consumers which are or become "non-compliant" during the process are excluded from further calculation. This on the one hand saves substantial processing power and time and on the other hand accounts for any potential non-compliance of consumers in the iteration process. The method and controller of the invention can thus handle non-compliant behaviour of consumers, while not taking the sovereignty completely away from the consumers. This can especially be of advantage under unexpected and fluctuating minimal power consumption of the users.

In a further embodiment of the invention a subset of critical lines and critical nodes can be determined from all lines and nodes in the network, and for said constraint, that line currents and node potential drops in the network model stay within allowed ranges over the entire prediction time window, only the line currents and node potential drops of said subset are considered when solving the optimization problem. This embodiment yields a further reduction in processing time and power.

If a smart consumer needs a guaranteed minimum power consumption profile to assure a safe or critical operation, the method of the invention can comprise in a further embodiment the step of obtaining a required minimum power consumption profile for at least a part of said prediction time window for at least one of the smart consumers, wherein in solving the optimization problem the further constraint, that the to-be-determined proposed power consumption profile for said smart consumer is greater than or equal to the required minimum power consumption profile for any time step thereof, is considered. Said required minimum power consumption profile can, e.g., be obtained as a specified time segment of the predicted power consumption profile of said smart consumer. For example, the consumer can specify this time segment when sending its predicted power consumption profile to the grid controller, indicating that the predicted power consumption profile in this time segment is a "non-negotiable" minimum.

In any of these embodiments of the invention, said measure which is minimized in solving the optimization problem can be any cost function which is dependent on the differences between the to-be-determined proposed power consumption profiles and the received predicted power consumption profiles, weighted by said influence weights. In a particularly preferred practical embodiment of the invention, the measure is based on the cost function

$$\sum_{j=1}^{n_P} \left(\theta_j - \theta_j^d\right)^T W \left(\theta_j - \theta_j^d\right)$$

with

$\theta_j$ being a vector of dimension $n_s$ of the to-be-determined proposed power consumptions at time step j of the prediction time window for all smart consumers,

$\theta_j^d$ being a vector of dimension $n_s$ of the received predicted power consumptions at time step j of the prediction time window for all smart consumers,

$n_s$ being the number of smart consumers,

$n_p$ being the number of time steps of the prediction time window, and

$W$ being a positive definite matrix containing said influence weights.

In particular, said measure can also be further based on the additive term

$$\gamma \sum_{i=1}^{n_s} f_i(s_i)$$

with

$f_i$ being a radially unbounded, positive definite real function,

$s_i$ being a slack variable for the i-th smart consumer, and

$\gamma$ being a weight,

which accounts for the constraint (25) detailed below. In particular, this slack variable and constraint can ensure for a power consumer that the total power consumption (energy) over the prediction time window, as proposed by the grid controller to the consumer, is at least the total power consumption (energy) predicted by said consumer.

Further objects, features and benefits of the method and grid controller of the invention will become apparent from the following detailed description of exemplary embodiments thereof.

## Brief Description of the Drawings

The invention will now be explained in detail with reference to the appended drawings, in which:

Fig. 1 is a single line diagram of an exemplary power grid,
Fig. 2 is a control scheme of an exemplary smart consumer, and
Fig. 3 is an exemplary diagram of iteration results.

## Detailed Description

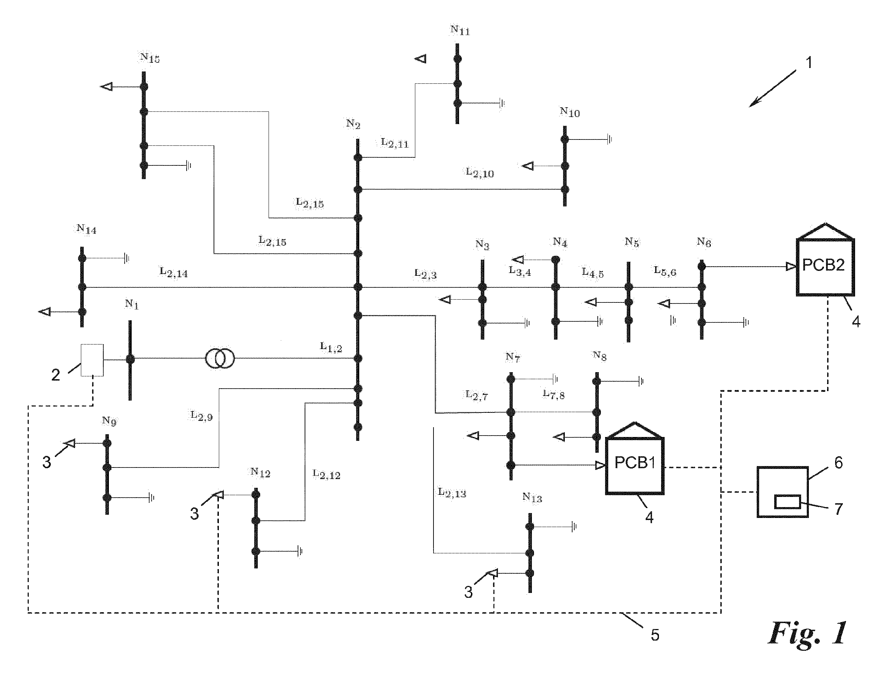

Fig. 1 shows a simplified single line diagram of an exemplary power grid 1 having one or more internal or external power producers 2 and power consumers 3, 4, a network of power nodes $N_i$ and power lines $L_{i,j}$ between the i-th and j-th node, a wireless or wirebound communication infrastructure 5 connecting producers 2, consumers 3, 4 and further functional components (such as e.g. transformers) as far as necessary, and a grid controller ("HMPC") 6 connected to the communication infrastructure 5 via an interface. Some of the consumers 3, 4 are conventional "non-smart" consumers 3 (depicted as arrows), whereas some other are "smart" consumers 4 - such as exemplary predictively controlled buildings PCB1, PCB2 - which are capable of predicting their power consumption profile over a limited future time horizon, i.e. a prediction time window, as detailed further below.

It goes without saying that everything which is said here about smart consumers - and in the following the example "building" is used synonymously for "consumer" - applies in the same way to smart producers and smart producer-consumers ("prosumers"); the term "smart consumer" as used herein thus also comprises smart producers and smart prosumers and the term "power consumption" or "power production" is only a matter of sign.

The grid controller 6 has a model 7 of the network stored in its memory and a processor (not shown) accessing the memory for performing the methods disclosed herein. The network model 7 comprises impedances or admittances, respectively, of all nodes and lines (including components such as transformers etc.), as well as power generation profiles of the producers 2 and power consumption profiles of the non-smart consumers 3, as far as necessary for the methods and apparatus detailed below.

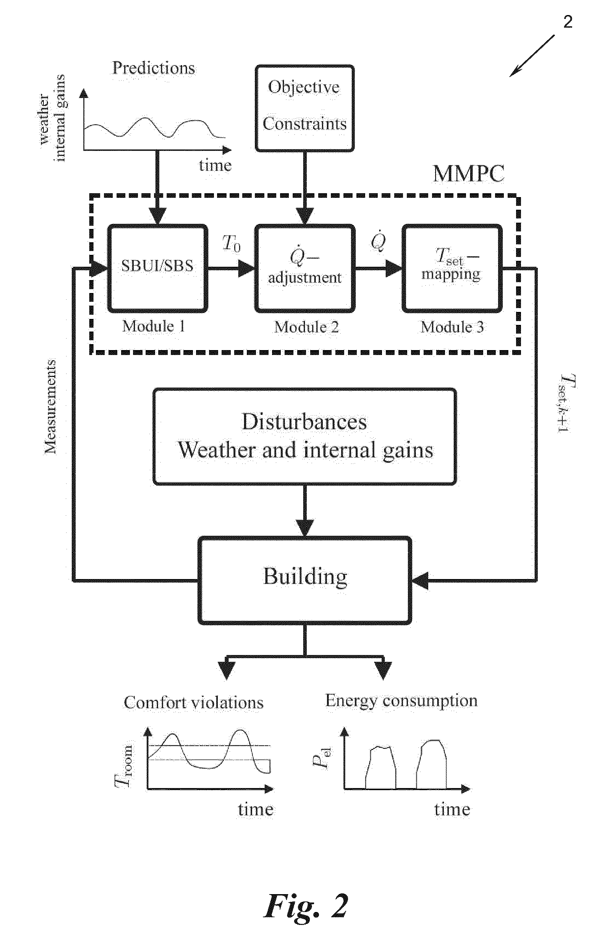

Fig. 2 shows a control scheme within one of the smart consumers 4 (here: a smart building) used in the following examples. $T_{set,k+1}$ refers to thermally activated building systems (TABS) set points for a next time step $k + 1$, $T_0$ are baseline trajectories, Q are trajectories of the heat flows to the TABS, both containing entries over $n_p$. $T_{room}$ is the room

temperature, and SBUI/SBS is the simplified building and building services model.

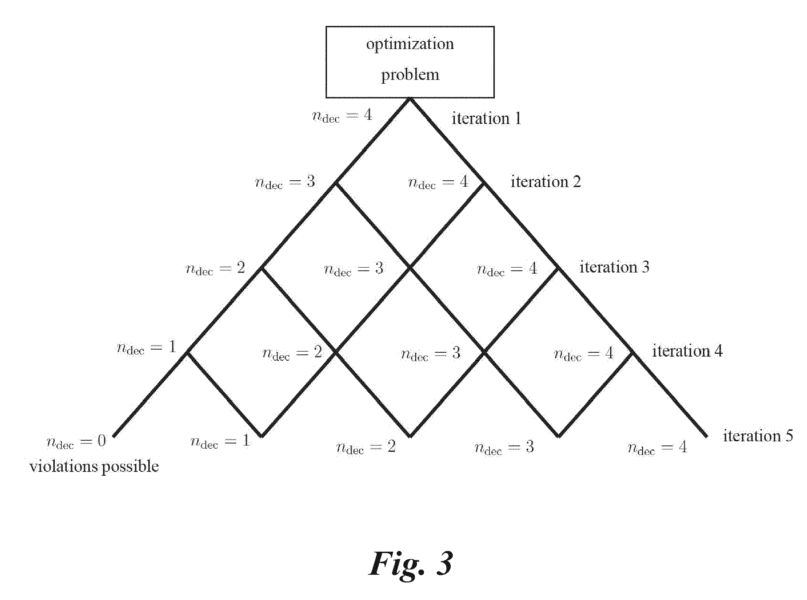

Fig. 3 shows iteratively the possible reduction of decision variables after each iteration step in the method disclosed herein, for an exemplary number of decision variables $n_{dec}$ = 4 at the beginning, under the assumption that in each iteration step only one building (smart consumer) becomes non-compliant. When $n_{dec}$ = 0, no decision variable is left and violations of the grid constraints are possible.

With reference to Figs. 1 to 3, the operation of the grid controller 6 and the method performed by the grid controller 6 in cooperation with the smart consumers 4 will now be described in greater detail in form of an exemplary, non-limiting embodiment of an electrical power grid 1.

While this embodiment refers specifically to an electrical power grid, the term "power" in the present context comprises all sorts of power, as stated at the outset, be it electrical power, hydraulic or pneumatic power, thermal power transported by fluids, water or steam in district heating grids, thermal power stored in combustible gases or fuels transported in fluid distribution grids, etc. Thus, the term "power" and the "power grid" 1 as used herein comprise all these sorts of powers and grids.

Similarly, the term "current" as used herein does not only comprise electrical currents but also encompasses mass flows or thermal energy flows on physical transportation lines, and the term "potential drop" as used herein does not only comprise voltage drops but also encompasses pressure drops, thermal energy drops et cet. occurring in physical distribution nodes.

## 1 System modelling

### 1.1 Electrical Grid

### 1.1.1 Smart Grid Communication

A "smart grid" represents an efficiency improvement of the existing electrical power grid by employing the newest communication and information technologies, with the goal of reducing financial and environmental costs of power generation and consumption [10]. The smart grid 1 may employ a two-way digital communication infrastructure 5 which enables the producers 2 and consumers 3,4 to exchange information with the grid controller 6, see Fig. 1.

### 1.1.2 Modeling and simplification of the grid

In order for the HMPC 6 to be able to predict the line currents and voltage drops in the grid on some prediction horizon, and to be able to propose restrictions on the power consumption of the smart consumers (PCBs) 4 at critical times optimally, it is beneficial to have a simple model for the grid. This ensures that all calculations of the control algorithm can be performed in real time.

The grid 1 under consideration has a simple radial (tree) structure, however, more complex mesh structures are also covered by the proposed methodology. For the parameterization of the generation, grid distribution and power consumption profile in this exemplary embodiment, the following assumptions have been made:

a) *Supply*: In this example, the electricity producers and the transformer are not modeled by a specific dynamical model. Instead, the interaction of the grid with the electrical substation is replaced by an external grid element with constant voltage.

b) *Demand:* Power consumption profiles for the passive consumers are assumed to be known. One possible way to obtain this information is to generate it on the basis of annual measured energy consumption and synthetic normalized power consumption profiles. Furthermore, time-varying power consumption profiles for the PCBs are available.

c) *Distribution:* Network topology, characteristics of lines and transformers, and operation states of the networks are assumed to be known. For example, they may be based on specifications provided by the Distribution System Operator.

First off, simulations of the grid can be done to identify the technical limitations and possible violations of system constraints. These can be done by power system simulation software (e.g. PowerFactory, see [24]). Based on appropriate criteria, some nodes and branches in the grid may be identified as critical. For example, based on the simulation results of the grid, the branches and nodes with the lowest loading and voltage sensitivity are identified, and those nodes and branches with highest sensitivity can be referred to as critical. In order to avoid simulation effort for the uncritical nodes, the electrical grid can be simplified. For simplification, the uncritical nodes are appropriately grouped and replaced by single nodes. The power consumption profiles of those consumers on the reduced nodes are summed up and located on the replacing node. Branches with PCBs are typically left unchanged to resolve grid constrains on a detailed level.

**1.2 Linear Grid Model**

For the formulation of the optimization problem solved by the grid controller 6, it is advantageous to have a linear model of the grid 1. In this section the linear grid model 7 is derived, where the corresponding modeling approach is applicable to three phase electrical grids with symmetrical power consumption predictions.

**1.2.1 Impedance and Admittance Matrices**

The three-phase active and reactive power are mapped to a one phase model. The grid is modeled with the bus network admittance matrix $\tilde{Y}$ and the bus network impedance matrix $\tilde{Z} = \tilde{Y}^{-1}$ [19]. The admittance matrix $\tilde{Y}$ of the simplified grid model is a complex $n_{nodes} \times n_{nodes}$ matrix generated with the aid of nodal analysis [20], with the number of nodes $n_{nodes}$. Therefore Ohm's law can be written as

$$\tilde{I} = \tilde{Y}\tilde{U}, \tag{1}$$

with the node current vector $\tilde{I}$ and the node voltage vector $\tilde{U}$, containing the currents and electric potentials in all nodes of the electrical grid

$$\tilde{I} = \begin{bmatrix} I_{N_1} \\ \vdots \\ I_{N_{n_{nodes}}} \end{bmatrix}, \ \tilde{U} = \begin{bmatrix} U_{N_1} \\ \vdots \\ U_{N_{n_{nodes}}} \end{bmatrix}, \tag{2}$$

where $N_i$ denotes the $i$-the node, $i = 1,..., n_{nodes}$. Equation (1) represents $n_{nodes}$ linear equations. One equation in (1) is eliminated by choosing the node connected to the external producer to be the slack node, and for notational simplicity let it be denoted by $N_1$. For $N_1$ the line currents are unknown, and $U_{N_1} = V_0$ is the nominal voltage of the electrical grid.
The reduced admittance matrix $Y$ is generated by removing the row and column which corresponds to the slack bus, leading to $n_{noades} - 1$ equations and the reduced impedance matrix $Z = Y^{-1}$. Moreover, let $I$ and $U$ denote the node currents and voltages, where the slack node is removed. The node voltages are derived by

$$U = ZI - Z \begin{bmatrix} \tilde{Y}_{2,1} \\ \vdots \\ \tilde{Y}_{n_{nodes},1} \end{bmatrix} V_0 = \underbrace{ZI}_{-\Delta U} + V_0 1_{n_{nodes}-1}, \tag{3}$$

where $1_{n_{nodes}-1}$ is a vector of size $n_{nodes} - 1$ containing ones in all entries. Therefore the node voltage drop vector $\Delta U$ is given by:

$$\Delta U = -ZI. \tag{4}$$

**1.2.2 Obtaining the Node-Line Transformation Matrix**

The line currents are sorted into a vector $I_{line} = [I_{line,i,j}]^T$, containing all couples $(i, j)$ such that the line between nodes $N_i$ and $N_j$ exists. The lines connected to the slack node are omitted. The current between node $N_i$ and node $N_j$ is calculated by

$$I_{line,i,j} = (U_{N_i} - U_{N_j})Y_{i-1,j-1}, \tag{5}$$

$i, j \in \{2,..., n_{nodes}\}$. Hence $I_{line} \in \mathbb{R}^{n_{lines}}$, where $n_{lines}$ is the total number of lines in the grid which do not connect to the slack node. Further, (3) implies:

$$U_{N_i} = \sum_{l=2}^{n_{\text{nodes}}} Z_{i-1,l-1} I_{N_l} + V_0, \qquad (6)$$

where $i \in \{2, \dots n_{\text{nodes}}\}$. Equation (5) results in

$$I_{\text{line},i,j} = \sum_{l=2}^{n_{\text{nodes}}} \underbrace{(Z_{i-1,l-1} - Z_{j-1,l-1})Y_{i-1,j-1}}_{T_{\text{L,N},l-1}} I_{N_l}, \qquad (7)$$

with $T_{\text{L,N},l}$ column $l$ of the node-line transformation matrix $T_{\text{L,N}}$ to map node currents on line currents:

$$I_{\text{line}} = T_{\text{L,N}} I.$$

### 1.2.3 Linear System Matrices

In this subsection a static, linear state system for the simplified grid is derived, based on the above analysis. Assuming that the nodal voltage drop does not differ more than 10%, from the nominal voltage $V_0$ (this is in general the allowed range for voltage drops, see [21]), and that the electric consumption of the passive consumers and the PCBs is known, the electric current can be determined as follows:

$$Re(I_{N_i}) = \frac{P_{\text{el},i}}{V_0},$$
$$Im(I_{N_i}) = -\frac{Q_{\text{el},i}}{V_0}, \qquad (8)$$

$\forall\, i \in \{2,\dots, n_{\text{nodes}}\}$, where $P_{\text{el},i}$ and $Q_{\text{el},i}$ denote the active and reactive power summed up over all consumers at the $i$-th node, respectively. Therefore, the node voltage drops $\Delta U \in \mathbb{R}^{n_{\text{nodes}} \times n_{\text{p}}}$ and the line currents $I_{\text{line}} \in \mathbb{R}^{n_{\text{lines}} \times n_{\text{p}}}$ for the prediction horizon $[t_k, t_{k+np}]$ can be written as:

$$\Delta U = D_{\Delta U} P_{\text{el}} + E_{\Delta U} L_{\text{passive}} \qquad (9)$$

$$I_{\text{line}} = D_{I_{\text{line}}} P_{\text{el}} + E_{I_{\text{line}}} L_{\text{passive}}, \qquad (10)$$

with the power consumption matrix of the passive buildings $L_{\text{passive}} = [P_{\text{el,passive}}, Q_{\text{passive}}, S_{\text{passive}}]^{\text{T}} \in \mathbb{R}^{3n_{\text{passive}} \times n_{\text{p}}}$ consisting of the active, reactive and apparent power on the prediction horizon, with $n_{\text{passive}}$ the number of nodes where passive buildings consume power. The active power consumption of the predictively controlled buildings on the prediction horizon is given by $P_{\text{el}} \in \mathbb{R}^{n_{\text{s}} \times n_{\text{p}}}$, with $n_{\text{s}}$ the number of predictively controlled buildings. The utilized matrices concerning the predictive controlled buildings are

$$D_{\Delta U} = \frac{\sqrt{3}}{V_0}(R + X\Phi_{\Delta U})T_{\text{pred}}, \qquad (11)$$

$$D_{\mathrm{I}_{\mathrm{line}}} = \frac{1}{V_0}\Phi_{I_{\mathrm{line}}}T_{\mathrm{L,N}}T_{\mathrm{pred}}, \qquad (12)$$

with $T_{\mathrm{pred}}$ denoting the position of the nodes with predictive controlled buildings in the simplified electrical grid, $R = Re(Z)$, $X$ - $Im(Z)$. Furthermore $\Phi_{\Delta U}$ and $\Phi_{I_{\mathrm{line}}}$ are diagonal matrices such that $\Phi_{\Delta U,ii} = \tan \phi_i$ and $\Phi_{I_{\mathrm{line}},ii} = \frac{1}{\cos\phi_i}$, where $\phi_i$ is the phase shift specific for the i-th predictively controlled consumer. For example, in a building where most of the consumption is caused by the heat pump, the phase shift of the heat pump is $\phi_i$. The matrices for the passive power consumption profiles are

$$E_{\Delta \mathrm{U}} = \frac{\sqrt{3}}{V_0}(RT_{\mathrm{passive}}T_{\mathrm{P}} + XT_{\mathrm{passive}}T_{\mathrm{Q}}) \qquad (13)$$

$$E_{\mathrm{I}_{\mathrm{line}}} = \frac{1}{V_0}T_{\mathrm{L,N}}T_{\mathrm{passive}}T_{\mathrm{S}} \qquad (14)$$

with $T_{\mathrm{passive}}$ denoting the position of the nodes at which passive consumers and the transformation matrices $T_{\mathrm{P}}$, $T_{\mathrm{Q}}$ and $T_{\mathrm{S}}$ select the active, reactive or apparent power out of the passive power consumption matrix $L_{\mathrm{passive}}$, respectively.

Note that in order to derive a real linear model, the imaginary part of $\Delta U$ is neglected and the absolute values of $I_{\mathrm{line}}$ are summed up. This model simplification is justified by validation using simulation results.

## 1.3 Model predictive control in buildings

For the hierarchical grid control algorithm, it is assumed that some buildings in the power grid have predictive control algorithms with a global electric power consumption constraint. The MMPC respects a global constraint on the overall electric consumption at each time step $k$ and generates predictions over the prediction horizon $[t_k, t_{k+n_\mathrm{p}}]$. It consists of three modules as shown in Fig. 2, and is described in the following:

In **Module 1** predictions over $[t_k, t_{k+n_\mathrm{p}}]$ are obtained based on a nonlinear simplified building model and building services model (SBUI/SBS) consisting of the heating and cooling system of the building and the building's thermal dynamics.

In **Module 2** a linearized model predictive control optimization problem is solved over a prediction horizon $[t_k, t_{k+n_\mathrm{p}}]$ in order to adjust the heat flow trajectories obtained in Module 1. The general optimization problem is a continuous linear programming problem with constraints on the room temperatures $T_{\mathrm{room},k}$ and Thermally Activated Building Systems (TABS) temperatures $T_{\mathrm{TABS},k}$, as well as those for the overall heat flows at each prediction step. It uses an LTI state space model of the building defined as

$$\begin{aligned} x_{k+1} &= Ax_k + Bu_k \\ y_k &= Cx_k + Du_k, \end{aligned} \qquad (15)$$

obtained by linearization of the nonlinear simplified building and building services model, with the state matrix $A$, the input matrix $B$, the output matrix $C$, the feed-through matrix $D$, the system states $x_k = [T_{\mathrm{TABS},k}^{\mathrm{T}} \quad T_{\mathrm{room},k}^{\mathrm{T}}]^{\mathrm{T}}$, the output vector $y_k = [x_k^{\mathrm{T}} \quad \bar{P}_{\mathrm{el},k}]^{\mathrm{T}}$, and the input vector $u_k = [\dot{Q}_{\mathrm{heat},k}^{\mathrm{T}} \quad \dot{Q}_{\mathrm{cool},k}^{\mathrm{T}}]^{\mathrm{T}}$. The input vector $u_k$ consists of the heating flows $\dot{Q}_{\mathrm{heat},k}$ and the cooling flows $\dot{Q}_{\mathrm{cool},k}$ at time step $k$. In addition to room and TABS temperatures, the output vector $y_k$. consists of the power consumption profile $P_{\mathrm{el},k}$, for the prediction horizon $n_\mathrm{p}$.

In **Module 3** set point trajectories $T_{\mathrm{set},k+1}$ are generated for the next time step by a mixed integer optimization to realize the heat flows $\dot{Q}$ - $[u_k\, u_{k+1}\, {}_{...}\, u_{k+n_\mathrm{p}-1}]$ via building services sub-control loops.

The heat pumps of the building are modeled with the Coefficient of Performance (COP) being defined by

$$\text{COP}_k = \frac{\dot{Q}_{\text{HP},k}}{P_{\text{el},k}}, \qquad (16)$$

with $\dot{Q}_{\text{HP},k}$ the generated heat flow and the consumed electric power by the heat pump. As seen in (16), COP depends on the prediction step $t_k$, however from applications it is known that it can be considered constant.

## 2 Hierarchical MPC

In this section the concept and the algorithm of the hierarchical model predictive grid controller 6 (HMPC) is presented. The controller 6 secures adherence to the specifications on the grid level, by ensuring that the node potential and the line currents stay in their allowed ranges at the critical nodes in the grid 1. This approach assures that power outages and disturbances, as well as permanent damage to the grid infrastructure, can be avoided.

### 2.1 Objectives on the grid level

First, the critical lines and nodes influenced by the predictive controlled buildings are identified. Hence, let $n_{\text{cn}}$ and $n_{\text{cl}}$ denote the corresponding number of the identified nodes and lines, respectively. The vectors $\Delta U_{\text{crit}} \in \mathbb{R}^{n_{\text{cn}}}$ and $I_{\text{crit}} \in \mathbb{R}^{n_{\text{cl}}}$ contain the voltage drops and line currents of the critical nodes and lines. Those are obtained by

$$\begin{aligned} \Delta U^{\text{crit}} &= T_{\text{U}} \, \Delta U, \\ I^{\text{crit}} &= T_{\text{I}} \, I_{\text{line}}, \end{aligned} \qquad (17)$$

where $T_{\text{U}} \in \mathbb{R}^{n_{\text{cn}} \times n_{\text{nodes}}}$ and $T_{\text{I}} \in \mathbb{R}^{n_{\text{cl}} \times n_{\text{lines}}}$ are the transformation matrices which take only those rows with critical nodes and lines. The goal of the controller is to enforce the following constraints:

$$\begin{aligned} \Delta U_{i,j}^{\text{crit}} &\leq \alpha_1 V_0, & i &= 1, \ldots, n_{\text{cn}}, \\ I_{i,j}^{\text{crit}} &\leq (1 + \alpha_2) I_0, & i &= 1, \ldots, n_{\text{cl}}, \end{aligned} \qquad (18)$$

$j = 1, \ldots, n_{\text{p}}$, for some predescribed allowed deviations $\alpha_1$, $\alpha_2 \in (0, 1)$ from the nominal voltage $V_0$ and line current $I_0$ in the grid. As already mentioned in Subsection 1.2, $\alpha_1 = 0.1$ is typically chosen (see [21]) while $\alpha_2$ depends on the material of the power cable (see [26]). In case when producers/prosumers are present in the grid, it becomes relevant to include lower bounds on the voltage drops and line currents in (18) in order to avoid over-voltage and/or negative currents.

### 2.2 Control algorithm

In this subsection the prerequisites for the proposed control scheme, and the controller algorithm are presented. The following assumptions have been made:

   a) The controller 6 is equipped with a mathematical model 7 of the grid.
   b) Smart consumers 4 in the grid 1 can predict their power consumption profile.
   c) Controller 6 has an approximation for the power consumption profiles of the passive consumers 3 on the prediction horizon.

The approximation for the power consumption profile of the passive consumers 3 can be easily obtained from the recorded historic data of the grid. At some fixed time step $t = t_k$, it is assumed that each PCB provides a prediction of its power consumption profile on a prediction horizon $[t_k, t_{k+n_p}]$. This information is contained in the matrix $P_{\text{el}}^{\text{d}} = [p_1^{\text{d}} \, p_2^{\text{d}} \ldots p_{n_{\text{p}}}^{\text{d}}] \in \mathbb{R}^{n_s \times n_{\text{p}}}$, where $p_{i,j}^{\text{d}}$ denotes the power consumption of the $i$-th building at the prediction step $t = t_{k+j}$. However, with this desired electrical power consumption of the PCBs 4, the grid constraints (18) are not necessarily satisfied. Thus, the main idea of the HMPC is to iteratively constrain the overall electrical power consumed by the PCBs at the critical time steps. For this purpose, the power consumption of the PCB is normalized: let the matrix $\Theta^{\mathrm{d}} \in \mathbb{R}^{n_{\mathrm{s}} \times n_{\mathrm{p}}}$ be given by $\Theta^{\mathrm{d}} = [\boldsymbol{\theta}_1^{\mathrm{d}} \, \boldsymbol{\theta}_2^{\mathrm{d}} \ldots \boldsymbol{\theta}_{n_{\mathrm{p}}}^{\mathrm{d}}]$, where

$$\Theta_{i,j}^{\mathrm{d}} = \frac{p_{i,j}^{\mathrm{d}}}{P_{\mathrm{norm},i}}, \tag{19}$$

$i = 1, \ldots, n_{\mathrm{s}}, j = 1, \ldots, n_{\mathrm{p}}$. Here $P_{\mathrm{norm},i}$ is the maximal electrical power consumption of $i$-th consumer. In a building where the power consumption is mainly caused by HVAC, $P_{\mathrm{norm},i}$ can be obtained as maximal electrical power consumption of the heat pump $P_{\mathrm{norm},i} = \frac{\dot{Q}_{\mathrm{M},i}}{\mathrm{COP}_i}$, where $\mathrm{COP}_i$ is the coefficient of performance of the heat pump, and $\dot{Q}_{\mathrm{M},i}$ the maximal total heat flow, see (16).

The idea is that the matrix $\Theta^*$ contains the information about the consumption constraints prescribed by the grid controller. In case that no constraints at time $t = t_{k+j}$ exist, then $\boldsymbol{\theta}_j^* = \mathbf{1}_{n_{\mathrm{s}}}$, i.e. the vector $\boldsymbol{\theta}_j^*$ has ones in all entries. In case of a violation of the line current or the node voltage drop condition (18), the set of all prediction steps in which a grid violation occurs is denoted by $\mathcal{J} \subset \{1, \ldots, n_{\mathrm{p}}\}$. Then the following optimization problem is solved over all critical prediction time steps:

$$[\Theta^*, s^*] = \arg\min_{\substack{s, \boldsymbol{\theta}_j \in \mathbb{R}^{n_{\mathrm{s}}}, j \in \mathcal{J} \\ j \in \mathcal{J}}} \sum_{j \in \mathcal{J}} (\boldsymbol{\theta}_j - \boldsymbol{\theta}_j^{\mathrm{d}})^\top W (\boldsymbol{\theta}_j - \boldsymbol{\theta}_j^{\mathrm{d}}) + \gamma \sum_{i=1}^{n_{\mathrm{s}}} f_i(s_i), \tag{20}$$

with the constraints

$$\Delta U_{i,j}^{\mathrm{crit}} \leq \alpha_1 V_0, \quad i = 1, \ldots n_{\mathrm{cn}} \tag{21}$$

$$I_{i,j}^{\mathrm{crit}} \leq (1 + \alpha_2) I_0, \quad i = 1, \ldots n_{\mathrm{cl}} \tag{22}$$

$$\Theta_{i,j} \geq 0, \tag{23}$$

$$s_i \geq 0, \tag{24}$$

$$\sum_{j=1}^{n_{\mathrm{m}}} \Theta_{i,j}^{\mathrm{d}} \leq \sum_{j=1}^{n_{\mathrm{m}}} \Theta_{i,j} + s_i, \quad , i = 1, \ldots n_s \tag{25}$$

and where $j \in \mathcal{J}$. The weight matrix $W \in \mathbb{R}^{n_{\mathrm{s}} \times n_{\mathrm{s}}}$ is a positive definite matrix i.e. $W > 0$. One possibility is to take $W$ to be a diagonal matrix with the inverse summed normalized influences in its diagonal:

$$W_{i,i} = \frac{\sum_{l=1}^{n_{\mathrm{s}}} r_l}{r_i}, \tag{26}$$

$i = 1, \ldots, n_{\mathrm{s}}$. Influence values for the buildings $r = [r_1 r_2 \ldots r_{n_{\mathrm{s}}}]$ are calculated as a sum of influences over the critical nodes and lines:

$$r = 1_{n_n}^\top T_U D_{\Delta U} + 1_{n_l}^\top T_l D_l.$$

Hence, weights are smaller for those buildings with larger influence on the violated values. More generally, matrix *W* may also be chosen as a positively definite matrix to account for couplings between consumers in the grid. Moreover, the objective of the constraint (25) is that on the time interval $[t_k, t_{k+n_m}]$ each building is provided with the amount of electrical energy which it has requested, whereby $n_m \le n_p$ is some appropriately chosen time step. The corresponding slack variables $s_i$ are added to the cost function $f_i$ with the weight $\gamma > 0$, where $f_i : \mathbb{R} \to \mathbb{R}$ is a positive definite, radially unbounded function. One possibility is to take $f_i(s) = s^2$, for $i = 1,..., n_s$. After solving the optimizing problem (20)-(22), the constraint matrix $P_{el}^c = [p_1^c \, p_2^c \ldots p_{n_p}^c] \in \mathbb{R}^{n_s \times n_p}$ is defined by

$$p_{i,j}^c = \theta_{i,j}^* P_{\mathrm{norm},i}, \tag{26}$$

where $p_{i,j}^c$ is the upper constraint on the consumption of building *i* at the prediction time $t = t_{k+j}$ set by the HMPC. The constraint (23) ensures that the upper constraints remain positive. Next, the new predictions $P_{el}^d$ on the consumption of PCBs are calculated with the additional constraint:

$$p_{i,j}^d \le p_{i,j}^c, \tag{27}$$

$i = 1, \ldots , n_s, j = 1, ..., n_p$. If the grid conditions (18) are not satisfied at all prediction steps with new power consumption profiles, the optimization problem (20)-(25) is solved again. However, when the grid conditions (18) are satisfied after some iteration step, the buildings can perform their control actions and the algorithm proceeds to the next time step $t_{k+1}$. The complete iterative algorithm is described in Algorithm 2.1.

---

**Algorithm 2.1** Hierarchical grid algorithm

---

**Initialize:**
$\Theta = ones(n_s, n_p)$
$\mathrm{Iter} = 0$
**while** $\mathrm{Iter} \le \mathrm{MaxIter}$ **do**
    $\mathrm{Iter} = \mathrm{Iter} + 1$
    Obtain predictions for predictive controlled buildings $P_{el}^d$ with constraints (27)
    Use (9) and (10) to calculate $\Delta U_{\mathrm{crit}}$ and $I_{\mathrm{crit}}$
    **if** Condition (18) holds **then**
        Break
    **else**
        Solve the optimization problem (20) with constraints (21)–(25)
    **end if**
**end while**
**Return:**
Constraints $P_{el}^c$

---

**Remark 2.1.** Note that once that grid controller 6 has set consumption constraints at some prediction step $t = t_{k+j}$, this constraint holds in all subsequent iterations as well. This ensures that in those later iterations, at prediction step $t = t_{k+j}$, grid conditions (21) and (22) hold. Therefore, the algorithm is carried out in maximum $n_p$ iterations, since in worst case scenario the constraints are calculated for each prediction step separately. However, in order to achieve real time performance of the algorithm, the total number of iterations at the time step $t = t_k$ may be limited to a previously set integer MaxIter $< n_p$, as implemented in Line 3 of the algorithm. However, with limitation of the iteration steps, violation of the grid constraints (21)-(22) is possible.

**Remark 2.2.** The two-way communication between the grid controller 6 and the smart consumers 4 in the smart grid proceeds as follows: The information on the predicted power consumption travels from each smart consumer to the grid controller. Inversely, the information travels back from the hierarchical controller to each smart consumer in the form of proposed bounds on consumers power consumption. Note that it is not required that the grid controller has a model of the smart consumers in the grid, nor there exists a direct information exchange between individual consumers.

## 2.3 Feasibility of the optimization problem

**In cases when the power consumption profiles of the passive consumers lead to violations of grid constraints, the optimization problem (20) with constraints (21)-(25) is not feasible (since the feasibility set is empty) and there are no possible measures to avoid critical voltage drops and/or line currents. In the following discussion, it will be assumed that this is not the case. Then it can be easily seen that the optimization problem (20)-(25) is always solvable and the solution is unique. For this purpose note that the cost function is radially unbounded (since it is quadratic), positive definite, and continuous. The feasibility set $F$ is nonempty, because

$$\Theta_{i,j} = 0, s_i = \sum_{j=1}^{n_m} \Theta_{i,j}^{\mathrm{d}},$$

for $i = \{1,..., n_s\}$, $j = \{1,..., n_p\}$ lies in the feasibility set (trivially). Moreover, conditions (21)-(25) imply that the feasibility set is closed and convex. Hence, the cost function in (20) obtains a minimum on the feasibility set $F$, and the minimizer is unique (see p.71, [22]).

## 2.4 Robust non-compliance of buildings

**In this subsection the Algorithm 2.1 is extended to scenarios in which some of the PCBs 4 in the grid do not comply with the restrictions (27) given by the HMPC 6. It is possible that some of the buildings 4 can not afford to lower their power consumption to meet the restrictions set by the controller without compromising their performance. It is therefore desirable that the controller recognizes these cases and accepts the minimal required power consumption of those PCBs 4. The algorithm for the controller which respects the non-compliance of the consumers is given in Algorithm 2.2. The clear advantage of this approach is that the consumers in the grid would be more willing to accept the concept of a HMPC, if the controller is flexible to their needs. The set $W$ contains the information about the compliant consumers for each prediction step. In the initialization at a new time step $t = t_k$, it is assumed that all consumers are compliant at all prediction steps. In the Lines 10-16 of the algorithm, the controller identifies the non-compliant buildings for each step of the prediction and eliminates them from the set $W$. This procedure has a tree structure. In extreme cases the iteration advances to the end of the branch where no decision-variable exists and violation of the constraint is possible, see Fig. 3.

---

**Algorithm 2.2** Hierarchical grid algorithm that incorporates the non-compliance of the consumers

---

**Initialize:**
$\Theta = ones(n_s, n_p)$
Iter $= 0$
$\mathcal{W} = \{1, \ldots, n_s\} \times \{1, \ldots, n_p\}$
**while** Iter $\leq$ MaxIter **do**
    Iter $=$ Iter $+ 1$
    Obtain predictions for predictive controlled buildings $\boldsymbol{P}_{el}^d$ with constraints (27)
    Use (9) and (10) to calculate $\Delta \boldsymbol{U}_{crit}$ and $\boldsymbol{I}_{crit}$
    **if** Condition (18) holds
        **then**
        Break
    **else**
        **for** $j = 1 : n_P$ **do**
            **for** $i = 1 : n_s$ **do**
                **if** $p_{i,j}^d > p_{i,j}^c$ **then**
                    $\mathcal{W} = \mathcal{W} \setminus \{i, j\}$
                **end if**
            **end for**
        **end for**
        Solve the optimization problem (20) with variables $\theta_{i,j}$, for $\{i, j\} \in \mathcal{W}$ and with constraints (21)–(25)
    **end if**
**end while**
**Return:**
Constraints $P_{el}^c$

---

**Remark 2.3.** Note that non-compliance of the buildings 4 can lead to unavoidable violations of the grid constraints, in the sense that at some prediction steps $t = t_{k+j}$ the grid condition (18) is violated and none of the PCBs 4 are compliant, and therefore HMPC 6 faces an infeasible optimization problem. The proposed strategy of the HMPC 6 for such scenarios is to introduce the grid constraints (21)-(25) as soft constraints [25] in the optimization problem, making the problem feasible and uniquely solvable again. The Algorithm 2.2 can have maximally $n_p \times n_s$ iterations, since in the worst case scenario the constraints need to be introduced at each prediction step, and in each iteration of the algorithm one consumer 4 becomes non-compliant.

**References:**

[1] D. McGinn, Renewables 2013 global status report, Tech. rep., REN21, Paris: REN21 Secretariat (2013).

[2] E. COMMISSION, ENERGY FOR THE FUTURE: RENEWABLE SOURCES OF ENERGY, White Paper for a Community Strategy and Action Plan, no. 97 in 599, 1997.

[3] M. Liserre, T. Sauter, J. Y. Hung, Future energy systems: Integrating renewable energy sources into the smart power grid through industrial electronics, Industrial Electronics Magazine, IEEE 4 (1) (2010) 18-37.

[4] K. Moslehi, R. Kumar, A reliability perspective of the smart grid, Transactions on Smart Grid 1 (1) (2010) 57-64.

[5] P. Luh, Y. Ho, R. Muralidharan, Load adaptive pricing: an emerging tool for electric utilities, Automatic Control, IEEE Transactions on 27 (2) (1982) 320-329.

[6] F. Oldewurtel, A. Ulbig, A. Parisio, G. Andersson, M. Morari, Reducing peak electricity demand in building climate control using real-time pricing and model predictive control, in: 49th Conference on Decision and Control (CDC), IEEE, 2010, pp. 1927-1932.

[7] F. Oldewurtel, A. Ulbig, M. Morari, G. Andersson, Building control and storage manage- ment with dynamic tariffs for shaping demand response, in: 2nd International Conference and Exhibition on Innovative Smart Grid Technologies (ISGT Europe), IEEE, 2011, pp. 1-8.

[8] P. Samadi, H. Mohsenian-Rad, R. Schober, V. W. Wong, Advanced demand side manage- ment for the future smart grid using mechanism design, Smart Grid, IEEE Transactions on 3 (3) (2012) 1170-1180.

[9] Z. Baharlouei, M. Hashemi, H. Narimani, H. Mohsenian-Rad, Achieving optimality and fairness in autonomous demand response: Benchmarks and billing mechanisms, Smart Grid, IEEE Transactions on 4 (2) (2013) 968-975.

[10] M. Shinwari, A. Youssef, W. Hamouda, A water-filling based scheduling algorithm for the smart grid, Smart Grid, IEEE Transactions on 3 (2) (2012) 710-719.

[11] J. Maestre, D. M. De La Peña, E. F. Camacho, A distributed MPC scheme with low commu- nication requirements, in: American Control Conference (ACC), IEEE, 2009, pp. 2797- 2802.

[12] S. Caron, G. Kesidis, Incentive-based energy consumption scheduling algorithms for the smart grid, in: Smart Grid Communications (SmartGridComm), 2010 First IEEE Interna- tional Conference on, IEEE, 2010, pp. 391-396.

[13] C. Ibars, M. Navarro, L. Giupponi, Distributed demand management in smart grid with a congestion game, in: Smart Grid Communications (SmartGridComm), 2010 First IEEE International Conference on, IEEE, 2010, pp. 495-500.

[14] A.-H. Mohsenian-Rad, V. W. Wong, J. Jatskevich, R. Schober, A. Leon-Garcia, Autonomous demand-side management based on game-theoretic energy consumption scheduling for the future smart grid, Transactions on Smart Grid 1 (3) (2010) 320-331.

[15] K. Trangbæk, M. Petersen, J. Bendtsen, J. Stoustrup, Exact power constraints in smart grid control, in: 50th Conference on Decision and Control and European Control Conference (CDC-ECC), IEEE, 2011, pp. 6907-6912.

[16] K. Trangbaek, J. D. Bendtsen, J. Stoustrup, Hierarchical control for smart grids, in: The 18th World Congress of the International Federation of Automatic Control (IFAC), 2011.

[17] F. Kennel, D. Gorges, S. Liu, Energy management for smart grids with electric vehicles based on hierarchical MPC, Transactions on Industrial Informatics 9 (3) (2013) 1528-1537.

[18] A. Schirrer, O. König, S. Ghaemi, F. Kupzog, M. Kozek, Hierarchical application of model-predictive control for efficient integration of active buildings into low voltage grids, in: Modeling and Simulation of Cyber-Physical Energy Systems (MSCPES), 2013 Work- shop on, IEEE, 2013, pp. 1-6.

[19] M. E. El-Hawary, Electrical Power Systems, IEEE Power Systems Engineering Series, 1995.

[20] K. M. Chandy, U. Herzog, L. Woo, Parametric analysis of queuing networks, Journal of Research and Development 19 (1) (1975) 36-42.

[21] DIN EN, 50160: 2011-02, Merkmale der UPS-I (in German).

[22] W. Kaplan, Maxima and minima with applications: practical optimization and duality, Vol. 51, John Wiley & Sons, 2011.

[23] Synthetic load profiles : APCS - Power Clearing & Settlement, http://www.apcs.at/en/ clearing/physical-clearing/synthetic-load-profiles, retrieved on 11/02/2015.

[24] PowerFactory - DIgSILENT Germany, http://www.digsilent.de/index. php/products-powerfactory.html (2014).

[25] Zheng, Alex, and Manfred Morari. "Stability of model predictive control with mixed constraints." Automatic Control, IEEE Transactions on 40.10 (1995): 1818-1823.

[26] DIN VDE 0100-430:2010-10. Low-voltage electrical installations, Part 4-43: Protection for safety - Protection against overcurrent, 2010.

**Claims**

1. A method for controlling power consumption in a power grid (1) having one or more power producers (2) and power consumers (3, 4), a network of power lines (L) and nodes (N) therebetween, a communication infrastructure (5) therebetween, and a grid controller (6) connected to the communication infrastructure, the grid controller (6) having a stored model (7) of the network, and at least one of the power consumers (3, 4) being a smart consumer (4) capable of predicting its power consumption profile ($\Theta^d$) over a prediction time window, comprising:

   for each smart consumer (4), determining an influence weight (W) of its power consumption on line currents (I) and node potential drops ($\Delta U$) in the network model;
   for said prediction time window, performing an iteration step in the grid controller (6) including:

   - receiving a predicted power consumption profile ($\Theta^d$) for said prediction time window from each smart consumer (4) via the communication infrastructure (5),
   - determining a proposed power consumption profile ($\Theta$) for said prediction time window for each of a selected set of smart consumers (4) by iteratively solving an optimization problem wherein a measure of the differences between the to-be-determined proposed power consumption profiles ($\Theta$) and the received predicted power consumption profiles ($\Theta^d$), respectively weighted by said influence weights (W), is minimized under the constraints that line currents (I) and node potential drops ($\Delta U$) in the network model (7) stay within allowed ranges over the entire prediction time window, and
   - sending said proposed power consumption profiles ($\Theta$) to the smart consumers (4) via the communication infrastructure (5);

   and repeating said iteration step for said prediction time window in a loop which is exited when at least one of the following conditions is met:

   - all line currents (I) and node potential drops ($\Delta U$) of the network, as calculated by applying the received predicted power consumption profiles ($\Theta^d$) to the network model (7), stay within allowed ranges over the entire prediction time window, or
   - none of the received predicted power consumption profiles ($\Theta^d$) has changed with respect to the preceding iteration step, or
   - a maximum number of iteration steps has been reached.

2. The method according to claim 1, wherein said selected set includes all of the smart consumers (4).

3. The method according to claim 1, wherein said selected set includes, for a selected time step (j) of the prediction time window, only those smart consumers (4) whose predicted power consumption profile ($\Theta^d$) has changed with respect to the preceding iteration step.

4. The method according to claim 3, wherein for each smart consumer (4) a flag indicating whether its predicted power consumption profile ($\Theta^d$) has changed from one iteration step to another is stored in a compliance matrix which defines said set and is used in the solving of the optimization problem, preferably such a flag for each time step (j) of the prediction time window.

5. The method according to any one of the claims 1 to 4, wherein a subset of critical lines ($L_{crit}$) and critical nodes ($N_{crit}$) is determined from all lines (L) and nodes (N) in the network, and wherein for said constraint only the line currents ($I_{crit}$) and node potential drops ($\Delta U_{crit}$) of said subset are considered when solving the optimization problem.

6. The method according to any one of the claims 1 to 5, comprising
obtaining a required minimum power consumption profile for at least a part of said prediction time window for at least one of the smart consumers (4),
wherein in solving the optimization problem the further constraint, that the to-be-determined proposed power consumption profile ($\Theta$) for said smart consumer (4) is greater than or equal to the required minimum power consumption profile for any time step thereof, is considered.

7. The method according to claim 6, wherein the required minimum power consumption profile is obtained as a specified time segment of the predicted power consumption profile ($\Theta^d$) of said smart consumer.

8. The method according to any one of the claims 1 to 7, wherein said measure is based on the cost function

$$\sum_{j=1}^{n_P}\left(\theta_j - \theta_j^d\right)^T W\left(\theta_j - \theta_j^d\right)$$

with

$\theta_j$ being a vector of dimension $n_s$ of the to-be-determined proposed power consumptions at time step j of the prediction time window for all smart consumers,

$\theta_j^d$ being a vector of dimension $n_s$ of the received predicted power consumptions at time step j of the prediction time window for all smart consumers,

$n_s$ being the number of smart consumers,
$n_p$ being the number of time steps of the prediction time window, and
$W$ being a positive definite matrix containing said influence weights.

9. The method according to claim 8, wherein said measure is further based on the additive term

$$\gamma\sum_{i=1}^{n_S} f_i\left(s_i\right)$$

with

$f_i$ being a radially unbounded, positive definite real function,
$s_i$ being a slack variable for the i-th smart consumer, and
$\gamma$ being a weight.

10. An electronic grid controller for a power grid (1) which has one or more power producers (2) and power consumers (3, 4), a network of power lines (L) and nodes (N) therebetween, and a communication infrastructure (5) therebetween, the grid controller (6) comprising:

an interface being part of the communication infrastructure (5);
a memory having a model (7) of the network stored therein; and
a processor being configured to implement the method according to any one of the claims 1 to 9.

*Fig. 1*

**Fig. 2**

*Fig. 3*

EP 3 059 646 A1

Europäisches
Patentamt

European
Patent Office

Office européen
des brevets

# EUROPEAN SEARCH REPORT

Application Number

EP 15 15 5604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SCHIRRER ALEXANDER ET AL: "Hierarchical application of model-predictive control for efficient integration of active buildings into low voltage grids", 2013 WORKSHOP ON MODELING AND SIMULATION OF CYBER-PHYSICAL ENERGY SYSTEMS (MSCPES), IEEE, 20 May 2013 (2013-05-20), pages 1-6, XP032498385, DOI: 10.1109/MSCPES.2013.6623327 ISBN: 978-1-4799-1304-6 [retrieved on 2013-10-07] * page 1 - page 6 * | 1-10 | INV. G05B13/04 G05B17/02 H02J3/12 |
| A | WO 2014/165986 A1 (ENERGY AWARE TECHNOLOGY INC [CA]) 16 October 2014 (2014-10-16) * paragraph [0029] - paragraph [0095] * | 1,10 | |
| A | US 5 017 799 A (FISHMAN DAVID A [US]) 21 May 1991 (1991-05-21) * column 1 - column 1 * | 6,7 | |
| A | US 2014/316598 A1 (YANG FANG [US] ET AL) 23 October 2014 (2014-10-23) * paragraph [0006] - paragraph [0122] * | 1-10 | TECHNICAL FIELDS SEARCHED (IPC) G05B H02J G06Q |

The present search report has been drawn up for all claims

| Place of search | Date of completion of the search | Examiner |
|---|---|---|
| The Hague | 19 August 2015 | Marinica, Raluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EP 3 059 646 A1

## ANNEX TO THE EUROPEAN SEARCH REPORT
## ON EUROPEAN PATENT APPLICATION NO.

EP 15 15 5604

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2015

| Patent document cited in search report | Publication date | Patent family member(s) | Publication date |
|---|---|---|---|
| WO 2014165986 A1 | 16-10-2014 | NONE | |
| US 5017799 A | 21-05-1991 | NONE | |
| US 2014316598 A1 | 23-10-2014 | US 2014316598 A1<br>WO 2014164220 A1 | 23-10-2014<br>09-10-2014 |

EPO FORM P0459

For more details about this annex : see Official Journal of the European Patent Office, No. 12/82

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. MCGINN.** *Renewables 2013 global status report, Tech. rep.,* 2013
- **E. COMMISSION.** White Paper for a Community Strategy and Action Plan, no. 97 in 599. *ENERGY FOR THE FUTURE: RENEWABLE SOURCES OF ENERGY,* 1997
- Future energy systems: Integrating renewable energy sources into the smart power grid through industrial electronics. **M. LISERRE ; T. SAUTER ; J. Y. HUNG.** Industrial Electronics Magazine. IEEE, 2010, vol. 4, 18-37
- **K. MOSLEHI ; R. KUMAR.** A reliability perspective of the smart grid, Transactions. *Smart Grid,* 2010, vol. 1 (1), 57-64
- **P. LUH ; Y. HO ; R. MURALIDHARAN.** Load adaptive pricing: an emerging tool for electric utilities. *Automatic Control, IEEE Transactions,* 1982, vol. 27 (2), 320-329
- Reducing peak electricity demand in building climate control using real-time pricing and model predictive control. **F. OLDEWURTEL ; A. ULBIG ; A. PARISIO ; G. ANDERSSON ; M. MORARI.** 49th Conference on Decision and Control (CDC). IEEE, 2010, 1927-1932
- Building control and storage manage- ment with dynamic tariffs for shaping demand response. **F. OLDEWURTEL ; A. ULBIG ; M. MORARI ; G. ANDERSSON.** 2nd International Conference and Exhibition on Innovative Smart Grid Technologies (ISGT Europe). IEEE, 2011, 1-8
- **P. SAMADI ; H. MOHSENIAN-RAD ; R. SCHOBER ; V. W. WONG.** Advanced demand side manage- ment for the future smart grid using mechanism design. *Smart Grid, IEEE Transactions,* 2012, vol. 3 (3), 1170-1180
- **Z. BAHARLOUEI ; M. HASHEMI ; H. NARIMANI ; H. MOHSENIAN-RAD.** Achieving optimality and fairness in autonomous demand response: Benchmarks and billing mechanisms. *Smart Grid, IEEE Transactions,* 2013, vol. 4 (2), 968-975
- **M. SHINWARI ; A. YOUSSEF ; W. HAMOUDA.** A water-filling based scheduling algorithm for the smart grid. *Smart Grid, IEEE Transactions,* 2012, vol. 3 (2), 710-719
- A distributed MPC scheme with low commu- nication requirements. **J. MAESTRE ; D. M. DE LA PEÑA ; E. F. CAMACHO.** American Control Conference (ACC). IEEE, 2009, 2797-2802
- Incentive-based energy consumption scheduling algorithms for the smart grid. **S. CARON ; G. KESIDIS.** Smart Grid Communications (SmartGridComm), 2010 First IEEE Interna- tional Conference. IEEE, 2010, 391-396
- Distributed demand management in smart grid with a congestion game. **C. IBARS ; M. NAVARRO ; L. GIUPPONI.** Smart Grid Communications (Smart- GridComm), 2010 First IEEE International Confer- ence. IEEE, 2010, 495-500
- **A.-H. MOHSENIAN-RAD ; V. W. WONG ; J. JATSKEVICH ; R. SCHOBER ; A. LEON-GARCIA.** Autonomous demand-side management based on game-theoretic energy consumption scheduling for the future smart grid. *Transactions on Smart Grid,* 2010, vol. 1 (3), 320-331
- Exact power constraints in smart grid control. **K. TRANGBÆK ; M. PETERSEN ; J. BENDTSEN ; J. STOUSTRUP.** 50th Conference on Decision and Control and European Control Conference (CDC-ECC). IEEE, 2011, 6907-6912
- **K. TRANGBAEK ; J. D. BENDTSEN ; J. STOUS- TRUP.** Hierarchical control for smart grids. *The 18th World Congress of the International Federation of Au- tomatic Control (IFAC),* 2011
- **F. KENNEL ; D. GORGES ; S. LIU.** Energy manage- ment for smart grids with electric vehicles based on hierarchical MPC. *Transactions on Industrial Infor- matics,* 2013, vol. 9 (3), 1528-1537
- Hierarchical application of model-predictive control for efficient integration of active buildings into low volt- age grids. **A. SCHIRRER ; O. KÖNIG ; S. GHAEMI ; F. KUPZOG ; M. KOZEK.** Modeling and Simulation of Cyber-Physical Energy Systems (MSCPES). IEEE, 2013, 1-6
- **M. E. EL-HAWARY.** Electrical Power Systems. *IEEE Power Systems Engineering Series,* 1995
- **K. M. CHANDY ; U. HERZOG ; L. WOO.** Parametric analysis of queuing networks. *Journal of Research and Development,* 1975, vol. 19 (1), 36-42
- **W. KAPLAN.** Maxima and minima with applications: practical optimization and duality. John Wiley & Sons, 2011, vol. 51
- *APCS - Power Clearing & Settlement,* 02 November 2015
- *PowerFactory - DIgSILENT Germany,* 2014

- **ZHENG ; ALEX ; MANFRED MORARI.** Stability of model predictive control with mixed constraints. *Automatic Control, IEEE Transactions,* 1995, vol. 40 (10), 1818-1823

- Low-voltage electrical installations. *Protection for safety - Protection against overcurrent,* 2010